(19) Europäisches Patentamt
European Patent Office
Office européen des brevets

(11) Veröffentlichungsnummer: **0 596 323 A2**

(12) **EUROPÄISCHE PATENTANMELDUNG**

(21) Anmeldenummer: **93116947.8**

(22) Anmeldetag: **20.10.93**

(51) Int. Cl.5: **C09B 67/22**, D06P 3/66, //C09B62/517,C09B62/26, C09B62/10

(30) Priorität: **02.11.92 DE 4236937**
**23.02.93 DE 4305454**

(43) Veröffentlichungstag der Anmeldung:
**11.05.94 Patentblatt 94/19**

(84) Benannte Vertragsstaaten:
**CH DE FR GB LI**

(71) Anmelder: **BAYER AG**

**D-51368 Leverkusen(DE)**

(72) Erfinder: **Schwarz, Max, Dr.**
**Am Wasserturm 18**
**D-51379 Leverkusen(DE)**
Erfinder: **Wolff, Joachim, Dr.**
**Schlinghovener Strasse 38**
**D-51519 Odenthal(DE)**
Erfinder: **Hildebrand, Dietrich, Dr.**
**Wingensiefer Kamp 13**
**D-51519 Odenthal(DE)**
Erfinder: **Grütze, Joachim**
**Eschenweg 25**
**D-51519 Odenthal(DE)**
Erfinder: **Hoppe, Manfred, Dr.**
**Ammerweg 23**
**D-51515 Kürten-Bechen(DE)**
Erfinder: **Stawitz, Josef-Walter, Dr.**
**Am Hagen 1**
**D-51519 Odenthal(DE)**
Erfinder: **Schulz, Rolf, Dipl.-Ing.**
**Breite Strasse 169**
**D-50667 Köln(DE)**

(54) **Phthalocyaninreaktivfarbstoffmischung.**

(57) Eine Phthalocyaninreaktivfarbstoffmischung mit verbesserter Färbegalität und Kombinierbarkeit enthält wenigstens einen Phthalocyaninvinylsulfonylreaktivfarbstoff 1, wenigstens einen Phthalocyaninfluorchlorpyrimidinylreaktivfarbstoff 2 und/oder einen Phthalocyaninmonochlortriazinylreaktivfarbstoff 3.

EP 0 596 323 A2

Die Erfindung betrifft Mischungen von Phthalocyaninreaktivfarbstoffen, die beim Färben von Cellulosefasern oder Celluloseregeneratfasern ein gegenüber den Einzelkomponenten verbessertes Warenbild und ein verbessertes Kombinationsverhalten mit Reaktivgelbfarbstoffen bei der Erstellung von Grünfärbungen besitzen.

Das bei der Erstellung von Türkisfärbungen sowie von brillanten Grünfärbungen auf Fasermaterialien aus nativen oder regenerierten Cellulosefasersubstraten bzw. auf Mischungen derartiger Fasermaterialien mit synthetischen Fasermaterialien aus Polyester, Polyacrylnitril oder Polyamid erhaltene Warenbild zeigt im Vergleich zu der Egalität einer nach dem Stand der Technik hergestellten Blau-, Gelb- oder Rotfärbung sowie deren Kombinationsfärbungen zu üblichen Modetönen eine sehr stark vom Fasermaterial sowie von den Beleuchtungsbedingungen abhängige Einschränkung der Egalität. Diese für Phthalocyaninreaktivfarbstoffe typische Einschränkung der Egalität wird in der Fachsprache als Schipprigkeit bzw. "Skitteriness" bezeichnet.

Der Ausdruck Schipprigkeit oder Skitteriness stammt ursprünglich aus dem Bereich der Wollfärberei und bezeichnet das unegale Anfärben insbesondere das spitzig Färben der Wolle mit Reaktivfarbstoffen. Spitzigfärben bedeutet, daß sich die Faseranteile in einem Faserkollektiv insbesondere bei der Anwendung von Farbstoffkombinationen unterschiedlich anfärben, wobei die Faserspitzen ein helleres Aussehen erhalten, Das Resultat ist ein unruhiges, "schippriges" Warenbild, welches den heutigen Ansprüchen eines marktgerechten Textilmaterials nicht entspricht.

Im Bereich der Cellulosefasern, sowohl bei Baumwolle als auch Celluloseregeneratfasern ist ein ähnliches Warenbild beim Färben mit Kupferphthalocyaninfarbstoffen in Mischung mit gelben Azofarbstoffen bekannt,

Man versteht darunter eine Faserunegalität, welche darauf beruht, daß die im Faserkollektiv vereinigten Cellulosefasern eine unterschiedliche Farbstoffaufnahme zeigen, welche sich in Abhängigkeit vom Betrachtungswinkel in einem unruhigen Warenbild äußert. Die sogenannte Schipprigkeit von Phthalocyaninfärbungen wird besonders deutlich und verstärkt sich beim Färben von Grüntönen, d.h. bei der kombinierten Anwendung von Phthalocyaninreaktivfarbstoffen und Pyridon- sowie Pyrazolonazoreaktivfarbstoffen. Zur Überwindung des Schipprigfärbens von Phthalocyaninreaktivfarbstoffen wurden eine Reihe von Verfahren angegeben, um insbesondere durch Zusatz von Hilfsmitteln zum Färbebad bzw. durch Bildung der Lithiumsalze der Phthalocyaninreaktivfarbstoffe im Färbebad. die Gleichmäßigkeit der Anfärbung der Einzelfasern durch den Phthalocyaninreaktivfarbstoff zu verbessern. Diese Methode ist jedoch mit dem Nachteil verbunden. daß das Abwasser der Färbung zusätzlich mit Faserquell- oder Farbstofflösemitteln anaereichert ist, deren ökologische Akzeptanz eingeachränkt bzw. deren Entfernung aus den Abwässern mit hohen Kosten verbunden ist.

Nach T.A. Konkova und L.I. Belenkij Tekstilnaja Prom. 27, 4, 66-68 (1967) bestehen gegenüber binären Mischungen unterschiedlicher Reaktivität und Substantivität von Farbstoffen starke Bedenken hinsichtlich Unegalität und Unsicherheit der Farbnuance.

Die Erfindung betrifft weiterhin ein Klotzverfahren unter Verwendung einer Mischung von Phthalocyaninreaktivtürkisblaufarbstoffen in Kombination mit einer Mischung von Gelbreaktivfarbstoffen zum Färben von Cellulosefasern oder Celluloseregeneratfasern, welches ein gegenüber der Verwendung der Einzelkomponenten verbessertes Warenbild aufweist.

Bei der Anwendung von Phthalocyaninreaktivfarbstoffen nach Klotzverfahren zur Erstellung von Türkisfärbungen bzw. von brillanten Grünfärbungen auf Fasermaterialien aus nativen oder regenerierten Cellulosefasersubstraten bzw. auf Mischungen derartiger Fasermaterialien mit synthetischen Fasermaterialien aus Polyester oder Polyamid erhält man ein Warenbild. welches im Vergleich zu der Egalität einer nach dem Stand der Technik hergestellten Blau-. Gelb- oder Rotfärbung sowie deren Kombinationsfärbungen zu üblichen Modetönen eine sehr starke vom Fasermaterial sowie von den Beleuchtungsbedingungen abhängige Einschränkung der Egalität aufweist. Diese für Phthalocyaninreaktivfarbstoffe typische Einschränkung der Egalität beruht auf dem unterschiedlichen Fixierverhalten eines Phthalocyaninfarbstoffs auf den natürlichen und regenerierten Cellulosefasern.

Dies wird besonders deutlich bei Gegenwart eines Gelbfarbstoffs, welcher ein abweichendes Klotz- und Fixierverhalten aufweist.

Das Auseinanderfallen einer Türkis/Grünmischung beim Färben nach Klotzverfahren ist sowohl bei Baumwolle als auch bei Celluloseregeneratfasern bekannt. Die beim Färben mit Kupferphthalocyaninfarbstoffen in Kombination mit gelben Azofarbstoffen erhältlichen Färbungen zeigen das Problem der Faserunegalität (Schipprigkeit) und des Farbablaufs (Tonverschiebung durch bevorzugte Aufnahme von Türkis aus dem Klotztrog).

Beim Foulardieren wird aus dem Chassis bevorzugt der Phthalocyaninfarbstoff aufgenommen. Beim Klotz-Kaltverweil-Verfahren wird anschließend auf große Rollen aufgewickelt, so daß der zunächst geklotzte

Anteil im Innern des Warenwickels zum Lagern kommt. Beim anschließenden Waschprozeß wird aber die äußere Lage zuerst der Kontinue-Waschanlage zugeführt. Damit lagert der innere Anteil des Warenwickels länger.

Bei großen Unterschieden der Fixiergeschwindigkeit des Türkis- und Gelbanteils muß somit beim Verweilen eine zusätzliche Farbverschiebung auftreten, wenn der Türkisanteil langsamer fixiert als der Gelbanteil, d.h. bei den in der Praxis üblichen Verweilzeiten des Warenwickel besteht am Ende des Fixierprozesses bei den bisher bekannten Grünfärbungen häufig ein Unterschied im Fixierbad von Gelb und Türkis zwischen den inneren und äußeren Lagen eines aufgedockten Textilmaterials. Dadurch wird von den äußeren Lagen beim Nachwaschen der Färbung mehr Türkis ausgewaschen als von den inneren Lagen.

Zur Überwindung des langsamen Fixierverhaltens von Phthalocyaninreaktivfarbstoffen wurden eine Reihe von Verfahren angegeben, um insbesondere durch Zusatz von Hilfsmitteln zum Klotzbad die Gleichmäßigkeit der Anfärbung der Einzelfasern durch den Phthalocyaninreaktivfarbstoff sowie die Neigung zum Farbablauf zu verbessern. Diese Methode ist jedoch mit dem Nachteil verbunden, daß das Abwasser der Färbung zusätzlich mit Faserquell- oder Farbstofflösemitteln angereichert ist, deren ökologische Akzeptanz eingeschränkt bzw. deren Entfernung aus den Abwässern mit hohen Kosten verbunden ist.

Der Erfindung liegt die Aufgabe zugrunde, Phthalocyaninreaktivfarbstoffmischungen zur Erstellung von Türkis- und Grünfärbungen bereitzustellen, die bei guter Fixierausbeute unter praxisgerechten Färbebedingungen ein gegenüber den Einzelfarbstoffen verbessertes Warenbild ergeben und sich insbesondere für das Reaktivklotzfärbeverfahren eignen.

Die Farbstoffmischung sollte eine hohe Löslichkeit und Elektrolytunempfindlichkeit aufweisen und bei variablen Temperatur-, Alkali- und Flottenbedingungen ein im zeitlichen Verlauf nuancenkonstantes, flächenegales und reproduzierbares Färbeverhalten zeigen.

Die vorliegende Erfindung betrifft eine Farbstoffmischung aus wenigstens zwei Phthalocyaninreaktivfarbstoffen, welche eine unterschiedliche Reaktivgruppe aufweisen, dadurch gekennzeichnet, daß wenigstens ein Phthalocyaninvinylsulfonylreaktivfarbstoff 1 und wenigstens ein Phthalocyaninfluorchlorpyrimidinylreaktivfarbstoff 2 und/oder ein Phthalocyaninmonochlortriazinylreaktivfarbstoff 3 enthalten ist sowie gegebenenfalls eine Reaktivfarbstoffgelbmischung aus dem Farbstoff 4, 5 oder 6 und dem Farbstoff 7, 8 oder 9 der im folgenden angegebenen Strukturen.

Überraschenderweise wurde gefunden, daß sich die Egalität des Warenbildes von Phthalocyaninreaktivfärbungen auf Cellulosefasern anstelle durch Zusatz von Hilfsmitteln durch Mischungen unterschiedlicher Phthalocyaninreaktivfarbstoffe erreichen läßt, insbesondere durch Mischungen von Phthalocyaninreaktivfarbstoffen, welche unterschiedliche Reaktivgruppen aufweisen.

Bevorzugte Farbstoffe 1, 2 und 3 sind;

1.1

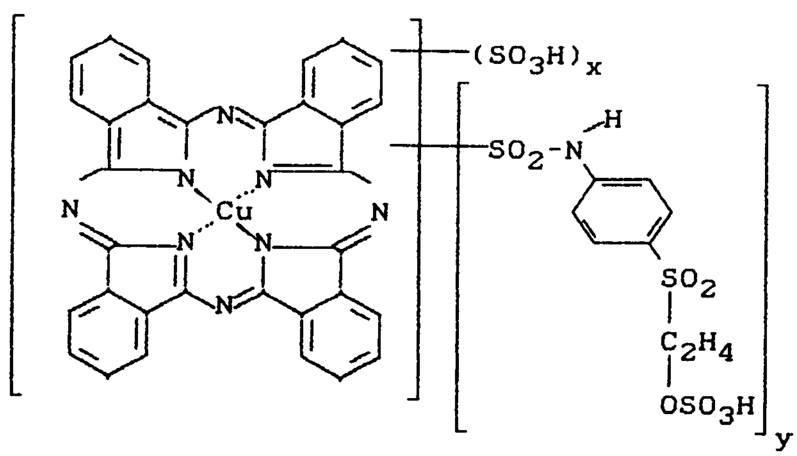

wobei

x = 1 bis 3, insbesondere 1,5 - 2,
y = 1 bis 3, insbesondere 1 - 2, speziell 1,3 - 1,8 und
x + y = etwa von 3 bis 4, beispielsweise

1.2

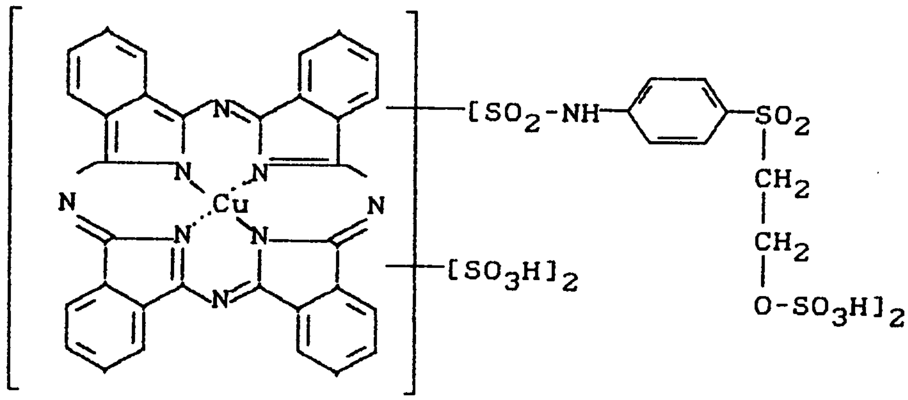

1.3

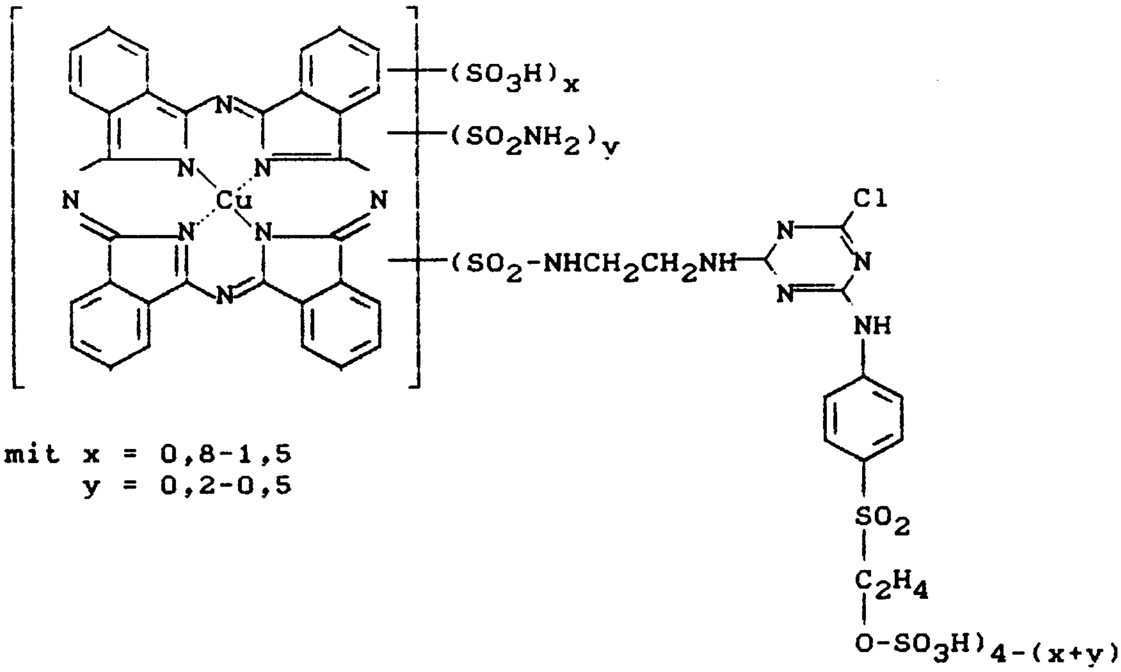

mit x = 0,8-1,5
y = 0,2-0,5

2.1

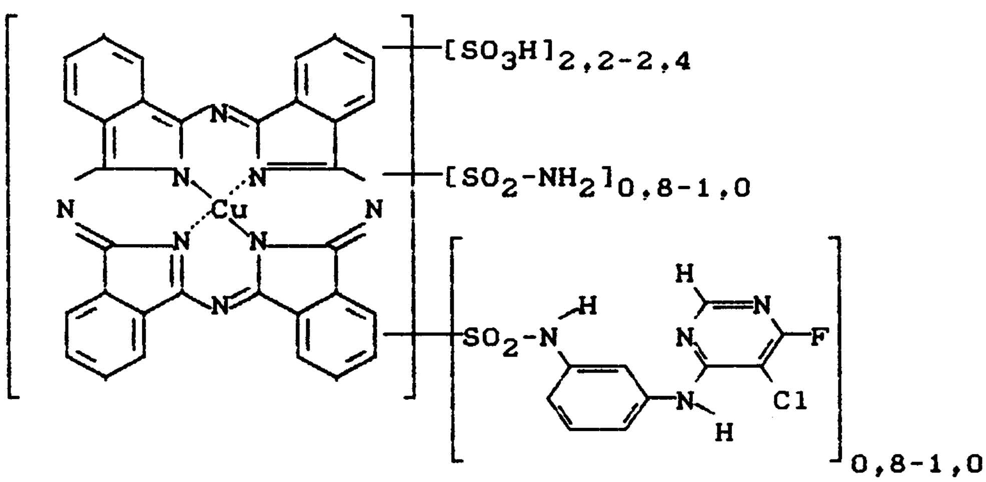

2.2

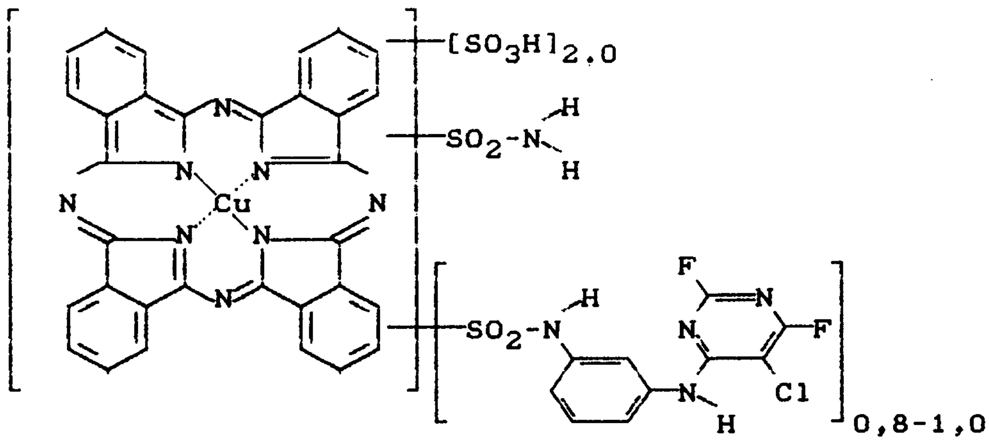

3.1

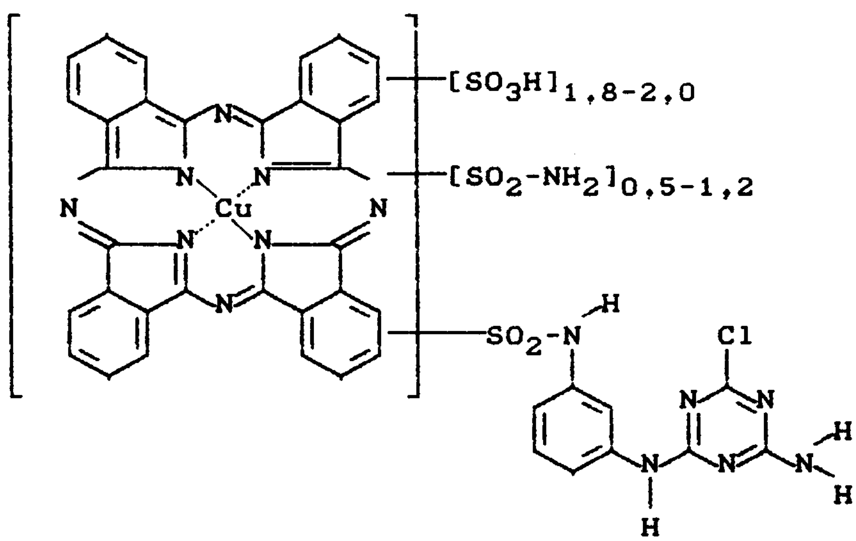

3.2

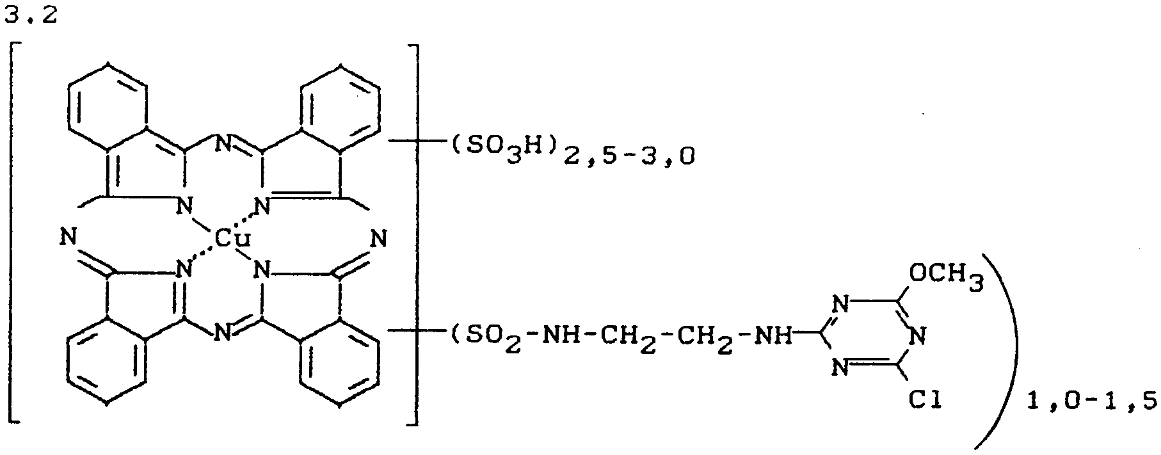

wobei es sich bei der Angabe der Zahl der Substituenten jeweils um statistische Mittelwerte handelt.

Die Farbstoffe 4-9 haben folgende Struktur:

4

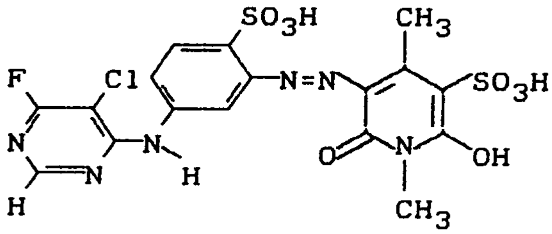

5

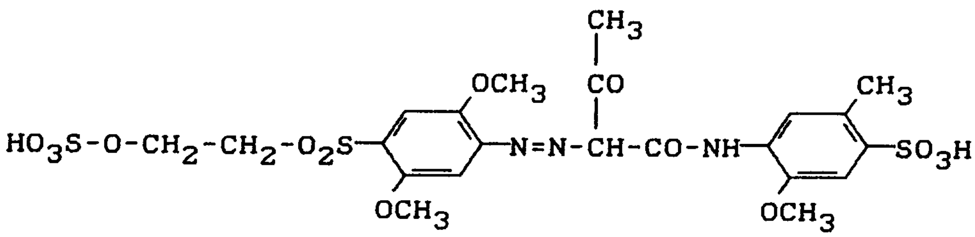

6

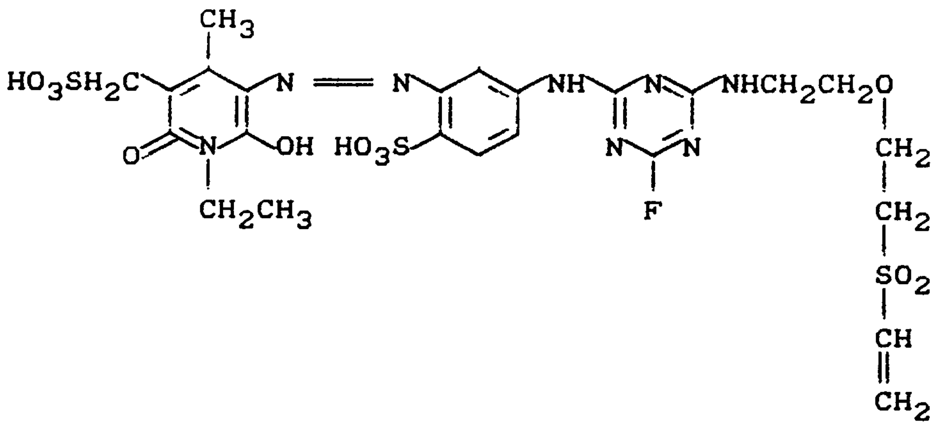

7

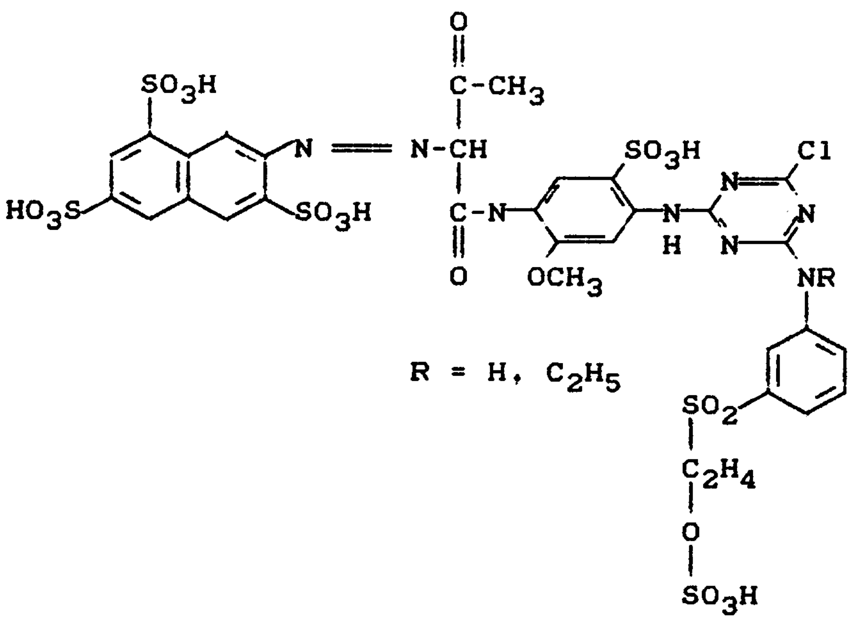

8

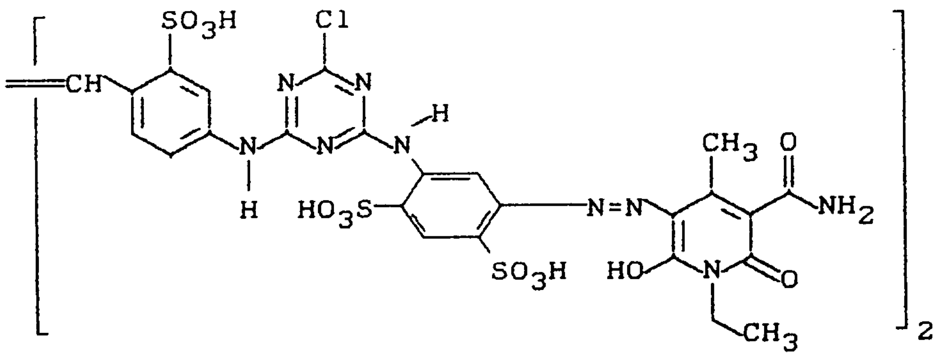

9

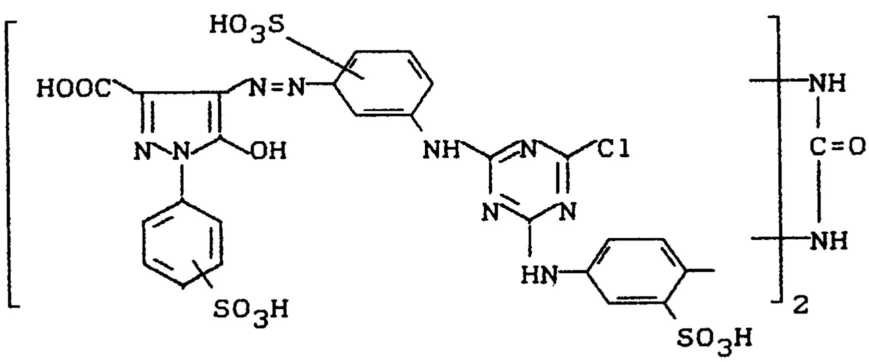

Überraschenderweise wurde außerdem gefunden, daß sich die Egalität des Warenbildes von Phthalocyaninreaktiv-Klotzfärbungen auf Cellulosefasern durch Mischungen unterschiedlicher Phthalocyaninreaktivfarbstoffe verbessern läßt, insbesondere durch Mischungen von Phthalocyaninreaktivfarbstoffen, welche unterschiedliche Reaktivgruppen aufweisen. Weiterhin wurde gefunden, daß sich auch die Egalität von brillanten Grünfärbungen auf Basis von Phthalocyanin und brillanten Azo-Gelbreaktivfarbstoffen verbessern läßt, wenn man als Gelbanteil Mischungen von zwei Reaktivgelbfarbstoffen verwendet, die ebenfalls unterschiedliche Reaktivgruppen aufweisen.

Das erfindungsgemäße Verfahren eignet sich in vorteilhafter Weise zur Erstellung von brillanten Grüntönen durch kombinierte Anwendung einer Mischung der Farbstoffe 1 und 2 bzw. 1 und 3 mit einer Mischung der Farbstoffe 4, 5 oder 6 unabhängig voneinander mit den Farbstoffen 7, 8 oder 9.

Es wurde auch gefunden, daß bei der Foulardapplikation eine wesentliche Verbesserung des Klotz- und Fixierverhaltens erreicht werden kann, so daß ein tongleiches Abquetschen der Klotzflotte im Foulard und ein nuancenkonstantes Fixieren im Dämpfer (pad steam) und beim Klotz-Kaltverweil-Prozeß (cold pad batch) möglich ist.

Besonders bevorzugte Reaktivtürkisblau-Mischungen sind:

Mischung 1: Farbstoffe 1.1 (mit x = etwa 1,5 - 2 und y = etwa 1,3 - 1,8) und 2.1
Mischung 2: Farbstoffe 1.2 und 2.1
Mischung 3: Farbstoffe 1.3 und 2.1
Mischung 4: Farbstoffe 1.1 (mit x = etwa 1,5 - 2 und y = etwa 1,3 - 1,8) und 2.2
Mischung 5: Farbstoffe 1.2 und 3.1
Mischung 6: Farbstoffe 1.1 (mit x = etwa 1,5 - 2 und y = etwa 1,3 - 1,8) und 3.2

Besonders bevorzugte Reaktivgelbmischungen sind:

Mischung 7: Farbstoffe 4 und 7
Mischung 8: Farbstoffe 4 und 8
Mischung 9: Farbstoffe 4 und 9
Mischung 10: Farbstoffe 5 und 7
Mischung 11: Farbstoffe 5 und 8
Mischung 12: Farbstoffe 5 und 9
Mischung 13: Farbstoffe 6 und 7

Mischung 14: Farbstoffe 6 und 8
Mischung 15: Farbstoffe 6 und 9

Die Mischungen enthalten bezogen auf den gesamten Farbstoffgehalt:

Farbstoff 1: 30 bis 70, insbesondere 40 bis 55 Gew.-%
Farbstoff 2: 30 bis 70, insbesondere 45 bis 60 Gew.-%
Farbstoff 3: 0 bis 70, insbesondere 0 bis 45 Gew.-%
Farbstoff 4: 30 bis 70, insbesondere 50 Gew.-%
Farbstoff 5: 30 bis 70, insbesondere 50 Gew.-%
Farbstoff 6: 30 bis 70, insbesondere 50 Gew.-%

Zusätzlich können weitere Farbstoffe oder übliche Hilfsmittel eingesetzt werden. Insbesondere enthalten die erfindungsgemäßen Farbstoffmischungen pro 100 Teile Farbstoff 1) bis 50 Teile eines anorganischen Salzes wie beispielsweise Kochsalz oder Natriumsulfat. Die erfindungsgemäßen Mischungen enthalten weiterhin vorzugsweise einen Puffer, insbesondere einen anorganischen Puffer, der einen Pufferungsbereich zwischen pH von 6,5 bis 7,5 ergibt. Zur besseren Handhabung enthalten die erfindungsgemäßen Mischungen vorzugsweise Dispergiermittel, insbesondere 0,5 bis 10 Gew.-Teile eines organischen, anionischen Dispergiermittels, bezogen auf die gesamte Mischung und ein Entstaubungsmittel, vorzugsweise 0,5 bis 5 Gew.-Teile bezogen auf die gesamte Mischung.

Die Farbstoffmischung kann vorzugsweise zum Färben von Baumwolle und anderen Cellulosefasern im Kaltverweil-Verfahren verwendet werden. Geeignete Materialien sind sowohl reine Cellulosefasermaterialien als auch deren Mischungen mit Polyester wie Polyester/Baumwolle, Polyester/Viskose, Polyester/Leinen sowie Mischungen verschiedener Cellulosefasern wie Baumwolle/Zellwolle bzw. Baumwolle/Leinen. Das Haupteinsatzgebiet der Mischung ist das Färben von Baumwollweb- und Wirkware sowie Frottierware.

Verweiltemperaturen von 20 °C bis 30 °C sind möglich, die bevorzugten Verweiltemperatur ist 25 °C, die bevorzugte Verweiltemperatur ist identisch mit der bevorzugten Klotztemperatur. Als technischer Fortschritt ist die bezogen auf die Farbtiefe für Türkis- und Grünfärbungen kurze Verweilzeit hervorzuheben.

In einer anderen bevorzugten Ausführungsform wird die Mischung im Klotz-Dämpf-Verfahren (pad steam) verwendet.

Die erfindungsgemäßen Mischungen eignen sich insbesondere für das Färben nach Klotzverfahren vorzugsweie nach folgenden Richtrezepturen:

A) Kaltverweil-Verfahren

Richtrezeptur:

1. 1000 Teile Klotzflotte enthalten
1 - 80 Teile Farbstoff
50 -100 Teile Wasserglas spez. Gew. 1,5
7,5- 15 Teile Natronlauge spez. Gew. 1,5
0 -100 Teile Harnstoff
0 - 2 Teile Netzmittel
0 - 20 Teile Verdickungsmittel
2. 1000 Teile Klotzflotte enthalten
1 - 80 Teile Farbstoff
8 - 20 Teile Soda
1 - 12 Teile Natronlauge spez. Gew. 1,5
0 -100 Teile Harnstoff
0 - 2 Teile Netzmittel
0 - 2 Teile Verdickungsmittel

| | |
|---|---|
| Flottenaufnahme | 50 - 120 % |
| Klotzflottentemperatur | 20 - 30 °C |
| Verweilzeit | 24 - 48 Std. |

B) Einbad-Klotz-Dämpf-Verfahren mit Zwischentrocknen

Richtrezeptur:

1000 Teile Klotzflotte enthalten
1 - 80 Teile Farbstoff
1 - 4 Teile Netzmittel
5 - 20 Teile Verdickungsmittel
5 - 20 Teile Soda wasserfrei
0 -100 Teile Harnstoff
3 - 5 Teile m-Nitrobenzolsulfonat

Verfahrensbedingungen:

| | |
|---|---|
| Klotzflottentemperatur | 20 - 30 °C |
| Flottenaufnahme | 50 - 70 % |
| Trocknungszeit | 1 - 2 Minuten |
| Trocknungstemperatur | 120 - 140 °C |
| Dämpftemperatur | 102 - 108 °C |
| Dämpfzeit | 1 - 8 Minuten |

C) Einbad-Klotz-Dämpf-Verfahren ohne Zwischentrocknen

Richtrezeptur:

1000 Teile Klotzflotte enthalten
1 - 80 Teile Farbstoff
1 - 4 Teile Netzmittel
10 - 20 Teile Soda wasserfrei
oder
10 - 20 Teile Natriumbicarbonat/Soda 50/50
3 - 5 Teile m-Nitrobenzolsulfonat

Verfahrensbedingungen:

| | |
|---|---|
| Klotzflottentemperatur | 20 - 30 °C |
| Flottenaufnahme | 50 - 70 % |
| Dämpftemperatur | 102 - 108 °C |
| Dämpfzeit | 1 - 8 Minuten |

D) Zweibad-Klotz-Dämpf-Verfahren mit Zwischentrocknen

Richtrezeptur:

1000 Teile Klotzflotte enthalten
1 - 80 Teile Farbtoff
1 - 4 Teile Netzmittel
5 - 20 Teile Verdickungsmittel

Chemikalienklotzflotte:

1000 Teile Chemikalienklotzflotte enthalten 250 Teile Kochsalz
20 - 40 Teile Soda wasserfrei
und/oder
20 Teile Natronlauge des spez. Gew, 1,5

Verfahrensbedingungen:

| | |
|---|---|
| Klotzflottentemperatur | 20 - 30 °C |
| Flottenaufnahme | 50 - 70 % |
| Trocknungszeit | 1 - 2 Minuten |
| Trocknungstemperatur | 120 - 140 °C |
| Flottenaufnahme im Chemikalienklotz | 50 - 70 % |
| Dämpfzeit | 1 - 8 Minuten |
| Dämpftemperatur | 102 - 108 °C |

E) Zweibad-Klotz-Dämpf-Verfahren ohne Zwischentrocknen

Richtrezeptur:

1000 Teile Klotzflotte enthalten
1 - 80 Teile Farbstoff
1 - 40 Teile Netzmittel

Chemikalienklotzflotte

1000 Teile Chemikalienklotzflotte enthalten 250 Teile Kochsalz
20 - 40 Teile Soda wasserfrei
und/oder
20 Teile Natronlauge des spez. Gew. 1,5

Verfahrensbedingungen:

| | |
|---|---|
| Klotzflottentemperatur | 20 - 30 °C |
| Flottenaufnahme | 50 - 70 % |
| Flottenaufnahme im Chemikalienklotz | 20 - 50 % |
| Dämpfzeit | 1 - 8 Minuten |
| Dämpftemperatur | 102 - 108 °C |

F) Klotz-Kondensier-Verfahren

Richtrezeptur:

1000 Teile Klotzflotte enthalten
1 - 40 Teile Farbstoff
1 - 4 Teile Netzmittel
5 - 10 Teile Soda
und/oder
5 - 10 Teile Natriumbicarbonat
5 - 20 Teile Verdickungsmittel
3 - 5 Teile m-Nitrobenzolsulfonat

Verfahrensbedingungen:

| | |
|---|---|
| Klotzflottentemperatur | 20 - 30 ° C |
| Flottenaufnahme | 50 - 70 % |
| Trocknungszeit | 1 Minute |
| Trocknungstemperatur | 120 - 140 ° C |
| Kondensiertemperatur | 140 - 160 ° C |
| Kondensierzeit | 1 Minute |

Die erfindungsgemäßen Mischungen eignen sich weiterhin insbesondere für das Färben im Ausziehverfahren vorzugsweise nach einem der folgenden Schemata:

A) Farbstoff-Start auf Haspelkufen

| Zeit (min) | Temperatur ( ° C) | Maßnahme |
|---|---|---|
| 0 | 60 | Farbstoffzusatz |
| 15 | 60 | Salz-Zusatz |
| 45 | 60 | Soda-Zusatz |
| 75 | 60 | Beginn des Aufheizens |
| 105 | 80 | Färben |
| 135 | 80 | Ende der Färbung |
| 145 | 80 | Ablassen der Färbeflotte |
| 165 | 60 | 1. Spülbad |
| 185 | 60 | 2. Spülbad |
| 215 | 80 | 3. Spülbad |
| 245 | 80 | 4. Spülbad |
| 290 | 95 | Kochbad |
| 300 | 20 | kalt spülen, ablassen |

B) Salzstart (salt at start) auf Jetfärbeapparaten mit Ansatzgefäß
(Das Salz wird dem Färbebad vor dem Farbstoff zugesetzt)

| Zeit (min) | Temperatur ( ° C) | Maßnahme |
|---|---|---|
| 0 | 30 | Salzzusatz bzw. Salzsole einziehen |
| 15 | 60 | Farbstofflösung einziehen |
| 45 | 60 | Alkalilösung einziehen |
| 75 | 60 | Beginn des Aufheizens |
| 105 | 80 | Färben |
| 135 | 80 | Ende der Färbung |
| 145 | 80 | Ablassen der Färbeflotte |
| 165 | 60 | 1. Spülbad |
| 185 | 60 | 2. Spülbad |
| 215 | 80 | 3. Spülbad |
| 245 | 80 | 4. Spülbad |
| 290 | 95 | Kochbad |
| 300 | 20 | kalt spülen, ablassen |

Zusätzlich können weitere Farbstoffe oder übliche Hilfsmittel eingesetzt werden. Insbesondere enthalten die erfindungsgemäßen Farbstoffmischungen pro 100 Teile Farbstoff 1) bis 50 Teile eines anorganischen Salzes wie beispielsweise Kochsalz oder Natriumsulfat. Die erfindungsgemäßen Mischungen enthalten weiterhin vorzugsweise einen Puffer, insbesondere einen anorganischen Puffer, der einen Puffarungsbereich zwischen pH von 6,5 bis 7,5 ergibt. Zur besseren Handhabung enthalten die erfindungsgemäßen Mischungen vorzugsweise Dispergiermittel, insbesondere 0,5 bis 10 Gew.-Teile eines organischen, anionischen Dispergiermittels, bezogen auf die gesamte Mischung und ein Entstaubungsmittel, vorzugsweise 0,5 bis 5

Gew.-Teile, bezogen auf die gesamte Mischung.

Die Farbstoffmischung kann vorzugsweise zum Färben von Baumwolle und anderen Cellulosefasern im Ausziehverfahren auf üblichen Färbeaggregaten verwendet werden.

Färbetemperaturen von 60°C bis 95°C sind möglich, die bevorzugte Färbetemperatur ist 80°C, die bevorzugte Starttemperatur 60°C.

Klotzverfahren

Beispiel 1

100 Teile einer entschlichteten und gebleichten Baumwollwebware werden mit einer Flottenaufnahme von 65 % mit einer wäßrigen Farbflotte imprägniert, welche in 1000 Teilen
2 Teile eines handelsüblichen Netzmittels
15 Teile des Farbstoffs 1.1 (mit x = etwa 1,5 - 2 und y = etwa 1,3 - 1,8)
15 Teile des Farbstoffs 2.1
50 Teile Wasserglas vom spez. Gew. 1,5
sowie
7,5 Teile Natronlauge vom spez. Gew. 1,5
gelöst enthält.

Die Temperatur der Flotte beträgt 25°C. Die mit Farbflotte imprägnierte Gewebebahn wird aufgedockt, in Polyethylenfolie eingepackt und bei langsamer Rotation 24 Stunden verweilt. Anschließend wird auf einer achtkästigen Kontinuebreitwaschmaschine nach folgendem Schema ausgewaschen. Zwei mal kalt spülen, zwei mal warm spülen, zwei mal kochend extrahieren, warm spülen, kalt spülen.

Man erhält eine egale klare Türkisblaufärbung mit guten Echtheitseigenschaften.

Beispiel 2

1000 Teile einer entschlichteten und gebleichten Baumwollwebware werden mit einer Flottenaufnahme von 65 % mit einer wäßrigen Farbflotte imprägniert, welche in 1000 Teilen
2 Teile eines handelsüblichen Netzmittels
38,5 Teile des Farbstoffs 1.1 (mit x = etwa 1,5 - 2 und y = etwa 1,3 - 1,8)
38,5 Teile des Farbstoffs 2.1
11,5 Teile des Farbstoffs 4
11,5 Teile des Farbstoffs 8
100 Teile Harnstoff
150 Teile Wasserglas vom spez. Gew. 1,5
sowie
154 Teile Natronlauge vom spez. Gew. 1,5
gelöst enthält,

Die Temperatur der Flotte beträgt 25°C. Die mit Farbflotte imprägnierte Gewebebahn wird aufgedockt, in Polyethylenfolie eingepackt und bei langsamer Rotation 48 Stunden verweilt. Anschließend wird auf einer achtkästigen Kontinuebreitwaschmaschine nach folgendem Schema ausgewaschen: Zwei mal kalt spülen, zwei mal warm spülen, zwei mal kochend extrahieren, warm spülen, kalt spülen.

Man erhält eine flächenegale, endengleiche tiefe Grünfärbung mit guten Echtheitseigenschaften.

Beispiel 3

1000 Teile einer abgekochten und gebleichten Baumwollwebware werden mit einer Flottenaufnahme von 65 % mit einer wäßrigen Farbflotte imprägniert, welche in 1000 Teilen
12,5 Teile des Farbstoffs 1.3
12,5 Teile des Farbstoffs 2.2
7,5 Teile des Farbstoffs 5
7,5 Teile des Farbstoffs 9
12 Teile Soda wasserfrei
sowie
8 Teile Natronlauge vom spez. Gew. 1,356
gelöst enthält.

Die Temperatur der Klotzflotte beträgt 25 °C. Die mit Farbflotte imprägnierte Gewebebahn wird aufgedockt, in Polyethylenfolie eingepackt und bei langsamer Rotation 48 Stunden verweilt. Anschließend wird auf einer achtkästigen Kontinuebreitwaschmaschine nach folgendem Schema ausgewaschen: Zwei mal kalt spülen, zwei mal warm spülen, zwei mal kochend extrahieren, warm spülen, kalt spülen.

Man erhält eine flächenegale, endengleiche tiefe Grünfärbung mit guten Echtheitseigenschaften.

Beispiel 4

1000 Teile einer entschlichteten und gebleichten Baumwollwebware werden mit einer Flottenaufnahme von 75 % mit einer wäßrigen Farbflotte imprägniert, welche in 1000 Teilen
2 Teile eines handelsüblichen Netzmittels
12 Teile des Farbstoffs 1.2
12 Teile des Farbstoffs 2.1
4 Teile des Farbstoffs 4
4 Teile des Farbstoffs 8
10 Teile eines handelsüblichen Polyacrylat-Verdickungsmittels
sowie
3 Teile m-Nitrobenzolsulfonat
gelöst enthält.

Die Temperatur der Flotte beträgt 30 °C. Die Warenbahn durchläuft anschließend einen Chemikalienklotz. Das wäßrige Chemikalienklotzbad enthält in 1000 Teilen 250 Teile Natriumchlorid und 20 Teile Natronlauge vom spezifischen Gewicht 1,5.
Nach dem Chemikalienklotzbad wird die Warenbahn in einen Schnelldämpfer übergeführt und 60 Sekunden bei 106 °C gedämpft. Danach wird auf einer achtkästigen Waschmaschine nach dem genannten Schema ausgewaschen.
Zwei mal kalt spülen, zwei mal warm spülen, zwei mal kochend extrahieren, warm spülen, kalt spülen.
Man erhält eine egale Grünfärbung mit guten Echtheitseigenschaften.

Beispiel 5

1000 Teile eines Polyesterfaser/Baumwoll-Feincordgewebes bestehend aus 80 Teilen Baumwolle und 20 Teilen Polyester werden mit einer Flottenaufnahme von 75 % mit einer wäßrigen Färbeflotte imprägniert, welche in 1000 Teilen
2 Teile eines handelsüblichen Netzmittels
10 Teile des Farbstoffs 1.1 (mit x = etwa 1,5 - 2 und y = etwa 1,3 - 1,8)
10 Teile des Farbstoffs 3.2
6 Teile des Farbstoffs 5
7 Teile des Farbstoffs 7
10 Teile eines handelsüblichen Verdickungsmittels
sowie
3 Teile m-Nitrobenzolsulfonat
gelöst enthält.

Die Temperatur der Flotte beträgt 30 °C. Die Warenbahn wird anschließend während 1 Minute bei 120 °C getrocknet und 1 Minute bei 220 °C thermosoliert. Die Warenbahn wird daraufhin im Chemikalienklotz mit einer Fixierlösung, welche in 100 Teilen
250 Teile Kochsalz und
30 Teile Natronlauge vom spez. Gew. 1,5
gelöst enthält, imprägniert.

Nach dem Chemikalienklotz wird in einem handelsüblichen Dämpfer 1 Minute bei 103 °C gedämpft. Nach dem wie beschrieben durchgeführten Nachwaschen und Spülen erhält man eine klare Grünfärbung mit guten Echtheitseigenschaften.

Ausziehverfahren

Beispiel 6

1000 Teile einer wässrigen Färbeflotte werden auf einer Haspelkufe bei 60 °C mit 100 Teilen einer gehleichten Baumwollwirkware und 3 Teilen einer Phthalocaninreaktivfarbstoffmischung versetzt. Die Mischung besteht aus je 1,5 Teilen des Farbstoffs 1.1 (mit x = etwa 1,5 - 2 und und y = etwa 1,3 - 1,8) und 1,5 Teilen des Farbstoffs 2.1.

Nachdem sich in einer Zeit von 15 Minuten die Farbstoffmischung gleichmäßig in der Flotte und auf der Baumwolle verteilt hat, werden über einen Zeitraum von 30 Minuten 50 Teile Natriumchlorid in die Färbeflotte gegeben und anschließend 10 Teile Soda im Abstand von 10 Minuten zu je 3 Portionen von je 1 Teil, 2 Teilen und 7 Teilen hinzugefügt. Anschließend wird in 30 Minuten auf 80 °C erwärmt und 30 Minuten bei dieser Temperatur behandelt. Danach wird die Flotte abgelassen, zweimal bei 60 °C und zweimal bei 80 °C gespült. Anschließend wird 15 Minuten kochend extrahiert und die Waschflotte abgelassen. Nach dem kalt Spülen erhält man eine egale Türkisfärbung mit guten Echtheitseigenschaften.

Das Warenbild der erhaltenen Färbung ist egaler als das Warenbild einer nach gleichem Färbeschema erhaltenen Färbung, in der jeweils 3 Teile ausschließlich der Farbstoff 1 bzw. Farbstoff 2 eingesetzt wurden.

Beispiel 7

800 Teile einer wäßrigen Färbeflotte werden auf eine handelsüblichen Jetfärbeaggregat bei 30 °C mit 100 Teilen Baumwollwirkware und 40 Teilen Natriumchlorid versetzt.

Nach 10 Minuten Behandeln bei dieser Temperatur wird in 15 Minuten auf 60 °C erwärmt und über einen Zeitraum von 45 Minuten 100 Teile einer Farbstofflösung zugesetzt bestehend aus

1 Teil einer Mischung aus
0,7 Teilen des Farbstoffs 1.2
0,3 Teilen des Farbstoffs 2.1
sowie
2 Teilen des Farbstoffs der Formel 4.1

Anschließend wird über einen Zeitraum von 45 Minuten 10 Teile Soda wasserfrei gelöst in 100 Teilen Wasser zugegeben. Nach 15 Minuten wird in 20 Minuten auf 80 °C erwärmt und 30 Minuten bei dieser Temperatur behandelt.

Danach wird die Flotte abgelassen, zweimal bei 60 °C und zweimal bei 80 °C gespült. Anschließend wird 15 Minuten kochend geseift und die Waschflotte abgelassen. Nach dem kalt Spülen erhält man eine egale Grünfärbung mit guten Echtheitseigenschaften.

Das Warenbild ist egaler als das Warenbild einer nach gleichem Färbeschema erhaltenen Färbung in der jeweils anstelle der Mischung aus Farbstoff 1 und 2 1 Teil des Farbstoffs 1 bzw. 1 Teil des Farbstoffs 2 eingesetzt wurden.

Beispiel 8

100 Teile eines gebleichten Baumwollgarnes werden auf einem handelsüblichen Garnfärbeapparat bei einer Flottenumwälzung von 27 1/kg/Minute mit 750 Teilen einer 60 °C warmen Färbeflotte behandelt, welche

40 Teile Natriumsulfat (wasserfrei)
10 Teile Soda (wasserfrei)
3 Teile einer Farbstoffmischung bestehend aus:
60 Teilen des Farbstoffs 1.3
40 Teilen des Farbstoffs 2.1
sowie
2 Teilen des Farbstoffs der Formel 8
enthält.

Das Bad wird in 20 Minuten auf 80 °C erwärmt und 60 Minuten bei dieser Temperatur gehalten. Nach dieser Zeit wird die Flotte abgelassen und zweimal mit 750 Teilen einer 60 °C warmen Flotte gespült. Danach wird mit 750 Teilen einer 60 °C warmen frischen Flotte aufgefüllt und 0,5 Teile einer 60%igen Essigsäure zugesetzt und auf 80 °C erwärmt. Nach 10 Minuten Behandeln bei dieser Temperatur wird die Flotte abgelassen und mit frischer Flotte von 60 °C auf das gleiche Volumen aufgefüllt und auf 95 °C gebracht. Nach 15 Minuten Behandeln bei dieser Temperatur wird abgelassen und kalt im Überlauf gespült.

Man erhält eine egale tiefe Grünfärbung.

Beispiel 9

100 Teile einer gebleichten Baumwollwebware werden auf einem handelsüblichen Kurzflottenjetfärbeaggregat mit 500 Teilen einer 60 °C warmen Färbeflotte behandelt, welche

30 Teile Natriumchlorid
10 Teile Soda (wasserfrei)
4 Teile der Farbstoffmischung bestehend aus 50 Teilen des Farbstoffs 1.1 (mit x = etwa 1,5 - 2 und y = etwa 1,3 - 1,8) 50 Teilen des Farbstoffs 2.1
0,5 Teile des Farbstoffs der Formel

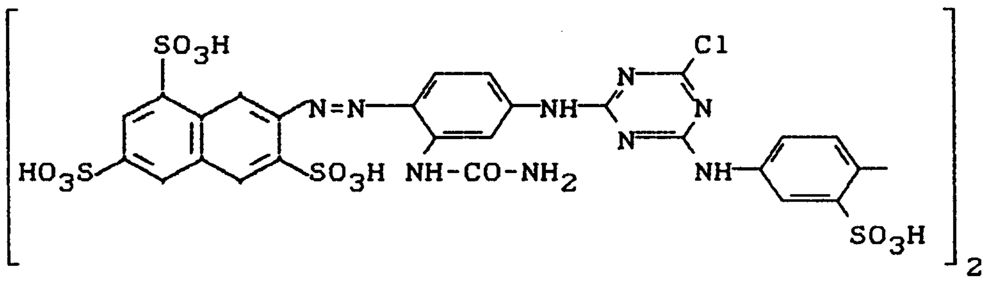

sowie
0,5 Teile des Farbstoffs der Formel

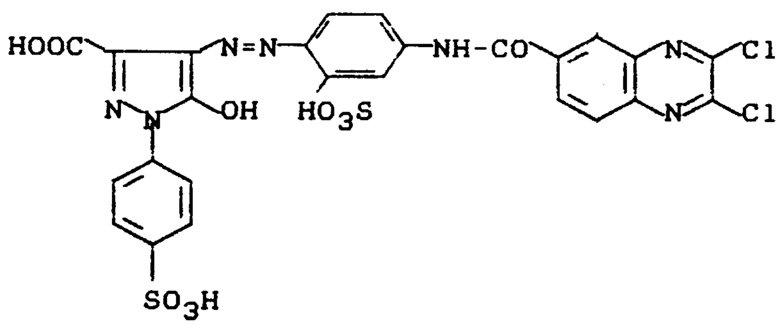

enthält.

Das Bad wird in 20 Minuten auf 80 °C erwärmt und 60 Minuten bei dieser Temperatur gehalten. Nach dieser Zeit wird die Flotte abgelassen und zweimal je 10 Minuten mit 800 Teilen einer 60 °C warmen Flotte und zweimal mit 800 Teilen einer 80 °C warmen Flotte gespült.

Anschließend wird mit frischer Flotte auf 95 °C erwärmt und 20 Minuten kochend extrahiert. Nach Ablassen der Waschflotte wird kalt gespült.

Man erhält eine egale Grünfärbung mit guten Echtheitseigenschaften.

Beispiel 10

100 Teile eines Viskosefasergewebes werden bei 80 °C auf einem handelsüblichen Jetfärbeaggregat mit 1000 Teilen einer Färbeflotte behandelt, welche
40 Teile Natriumsulfat (wasserfrei)
1 Teil Natriumbicarbonat
10 Teile Soda (wasserfrei)
1,2 Teile der Mischung bestehend aus
70 Teilen des Farbstoffs 1.1 (mit x = etwa 1,5 - 2 und y = etwa 1,3 - 1,8)
30 Teilen des Farbstoffs 3.1
1,8 Teile des Farbstoffs der Formel 4
2,0 Teile des Farbstoffs der Formel 8
enthält.

Das Bad wird 60 Minuten bei dieser Temperatur gehalten. Nach dieser Zeit wird die Flotte abgelassen und zweimal je 10 Minuten mit 1000 Teilen einer 80 °C warmen Flotte gespült. Anschließend wird mit frischer Flotte auf 95 °C erwärmt und 20 Minuten kochend extrahiert. Nach Ablassen der Waschflotte wird kalt gespült. Man erhält eine egale Grünfärbung mit guten Echtheitseigenschaften.

Beispiel 11

100 Teile einer gebleichten Baumwollmaschenware werden auf einem handelsüblichen Jetfärbeaggregat mit 800 Teilen einer 60 ° C warmen Färbeflotte behandelt, welche
30 Teile Natriumchlorid
10 Teile Soda (wasserfrei)
4 Teile der Farbstoffmischung bestehend aus
70 Teilen des Farbstoffs 1.1
30 Teilen des Farbstoffs 3.2
0,5 Teile des Farbstoffs der Formel

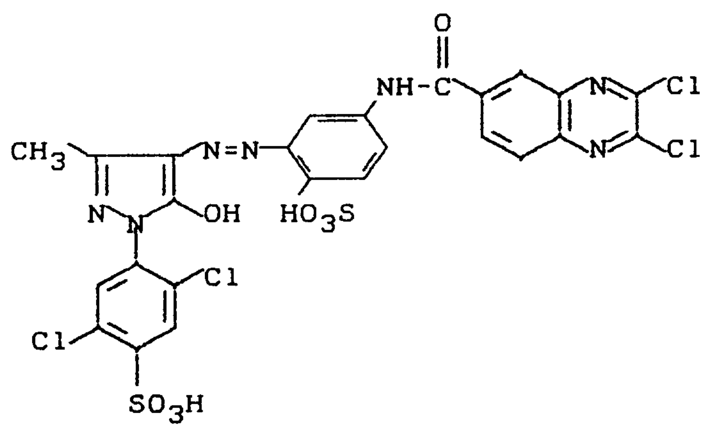

sowie
0,5 Teile des Farbstoffs der Formel

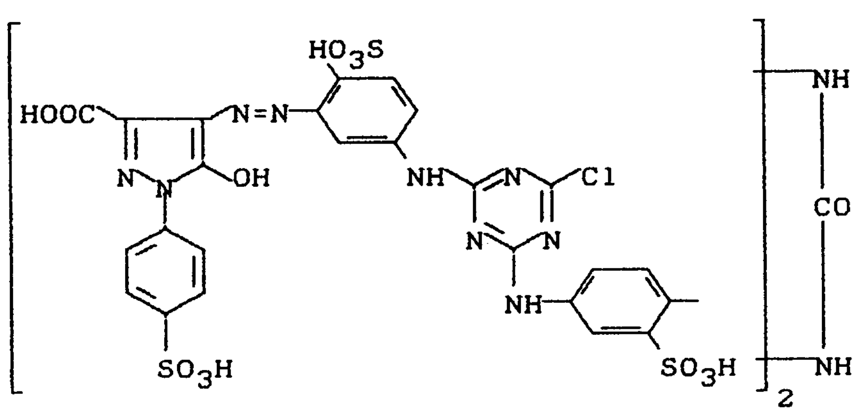

enthält.

Das Bad wird 60 Minuten bei dieser Temperatur gehalten. Nach dieser Zeit wird die Flotte abgelassen und zweimal je 10 Minuten mit 1000 Teilen einer 60 ° C warmen Flotte und zweimal mit 1000 Teilen einer 80 ° C warmen Flotte gespült. Anschließend wird mit frischer Flotte auf 95 ° C erwärmt und 20 Minuten kochen extrahiert. Nach Ablassen der Waschflotte wird kalt gespült.

Man erhält eine egale Grünfärbung mit guten Echtheitseigenschaften.

Beispiel 12

100 Teile einer gebleichten Baumwollmaschenware werden auf einem handelsüblichen Jetfärbeaggregat mit 800 Teilen einer 60 ° C warmen Färbeflotte behandelt, welche
40 Teile Natriumchlorid
10 Teile Soda (wasserfrei)

4 Teile der Farbstoffmischung bestehend aus
50 Teilen des Farbstoffs 1.1 (mit x = etwa 1,5 - 2 und y = etwa 1,3 - 1,8)
35 Teilen des Farbstoffs 2.1 und
15 Teilen des Farbstoffs 2.2
0,5 Teile des Farbstoffs der Formel

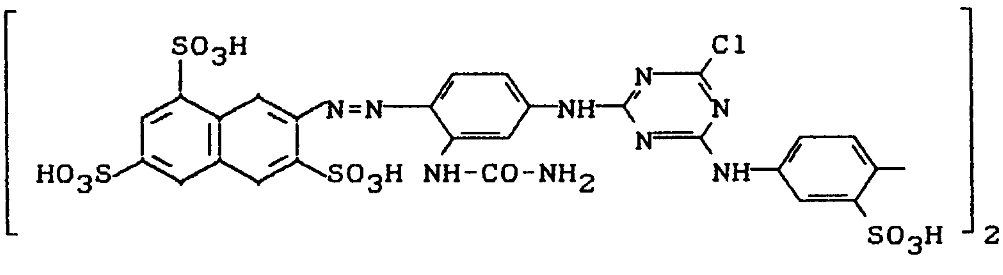

sowie
0,5 Teile des Farbstoffs der Formel

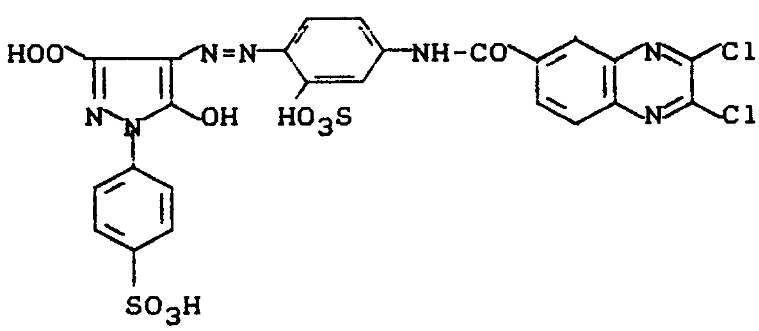

enthält.

Das Bad wird in 20 Minuten auf 80 ° C erwärmt und 60 Minuten bei dieser Temperatur gehalten. Nach dieser Zeit wird die Flotte abgelassen und zweimal je 10 Minuten mit 800 Teilen einer 60 ° C warmen Flotte und zweimal mit 800 Teilen einer 80 ° C warmen Flotte gespült.

Anschließend wird mit frischer Flotte auf 95 ° C erwärmt und 20 Minuten kochend extrahiert. Nach Ablassen der Waschflotte wird kalt gespült.

Man erhält eine egale Grünfärbung mit guten Echtheitseigenschaften.

## Patentansprüche

1. Farbstoffmischung enthaltend wenigstens zwei Phthalocyaninreaktivfarbstoffe, welche eine unterschiedliche Reaktivgruppe aufweisen, dadurch gekennzeichnet, daß wenigstens ein Phthalocyaninvinylsulfonylreaktivfarbstoff 1) und wenigstens ein Phthalocyaninfluorchlorpyrimidinylreaktivfarbstoff 2) und/oder ein Phthalocyaninmonochlortriazinylreaktivfarbstoff 3) enthalten ist.

2. Farbstoffmischen gemäß Anspruch 1, dadurch gekennzeichnet, daß der Phthalocyaninvinylsulfonylreaktivfarbstoff 1) einer der Formeln

1.1

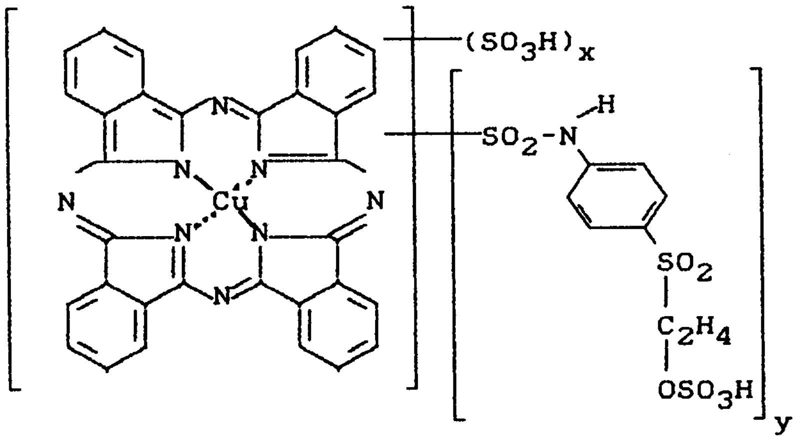

wobei
x = 1 bis 3,
y = 1 bis 3 stehen und
x + y = etwa 3 bis 4

1.2

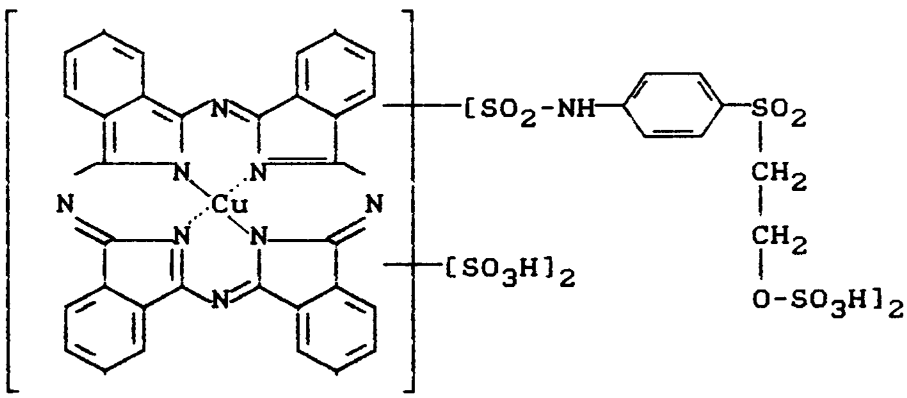

1.3

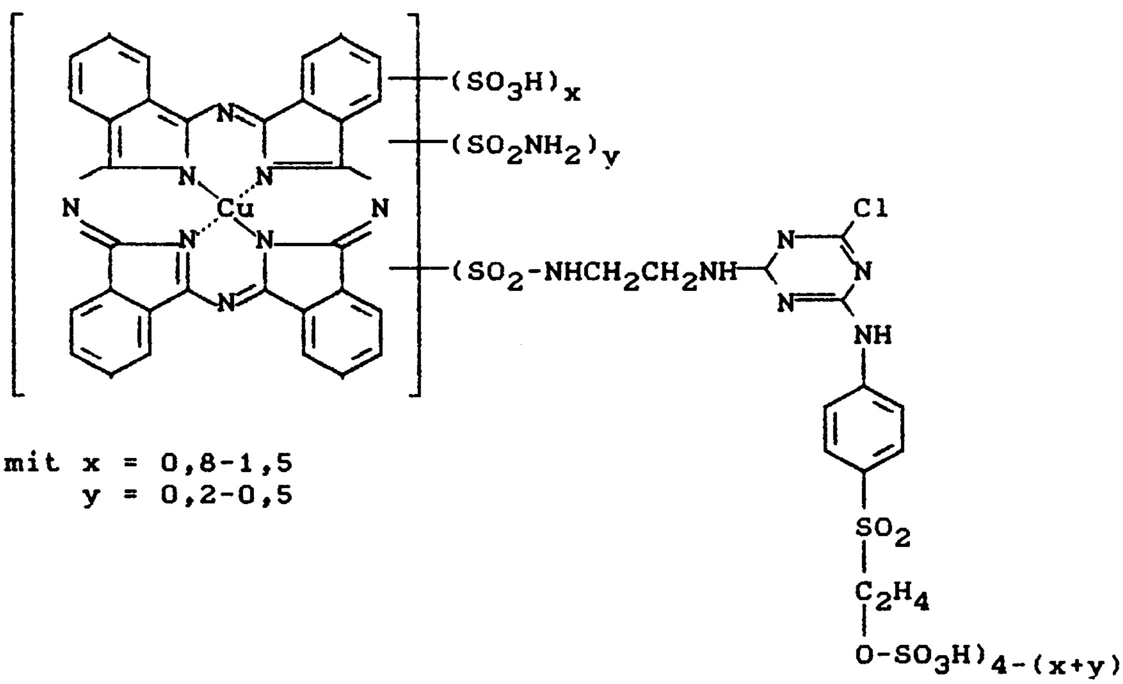

mit x = 0,8-1,5
y = 0,2-0,5

und der Phthalocyaninfluorchlorpyrimidinreaktivfarbstoff 2) einer der Formeln

2.1

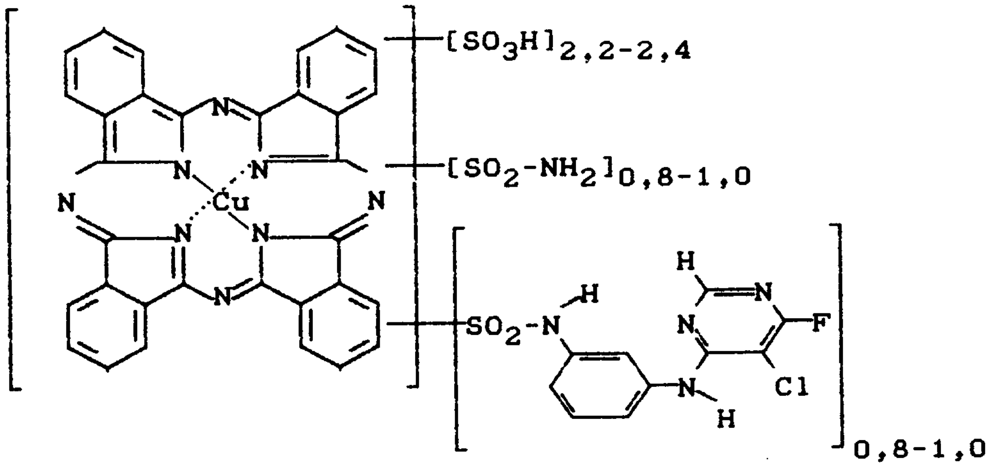

2.2

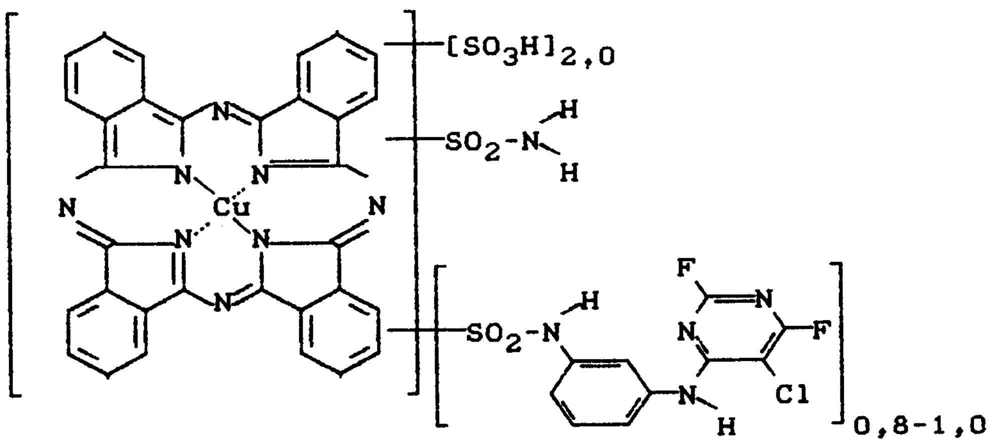

und der Phthalocyaninmonochlortriazinylreaktivfarbstoff 3) einer der Formeln

3.1

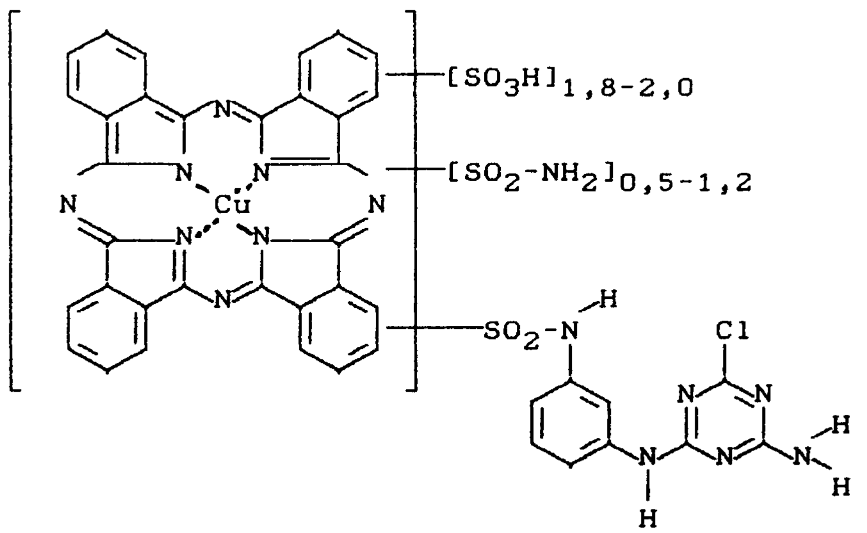

3.2

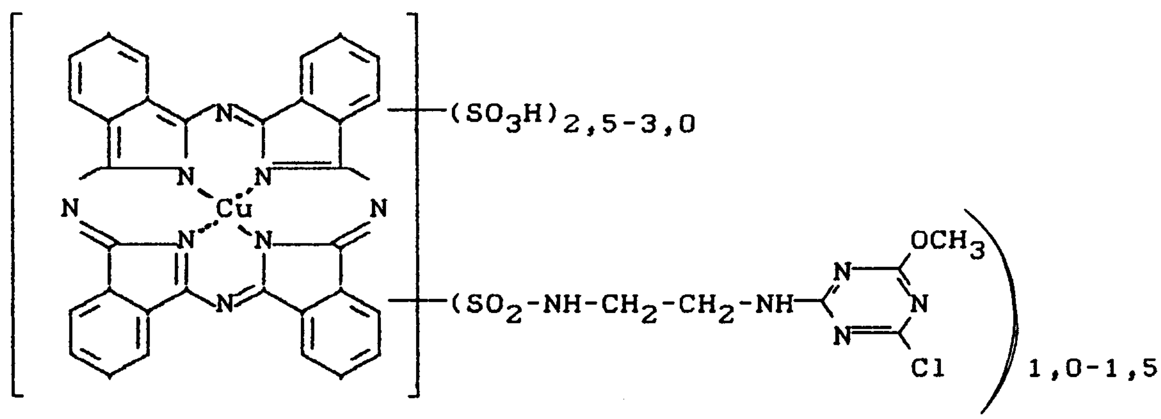

entspricht, wobei es sich bei der Angabe der Zahl der Substituenten jeweils um statistische Mittelwerte handelt.

3. Farbstoffmischung gemäß wenigstens einem der vorhergehenden Ansprüche, dadurch gekennzeichnet, daß die Mischung 30 bis 70 Gew.-% des Farbstoffs 1), 30 bis 70 Gew.-% des Farbstoffs 2) und 0 bis 70 Gew.-% des Farbstoffs 3) bezogen auf den gesamten Farbstoffgehalt enthält.

4. Farbstoffmischung gemäß wenigstens einem der vorhergehenden Ansprüche, dadurch gekennzeichnet, daß pro Teile Farbstoff 1) bis 50 Teile eines anorganischen Salzes und ein Puffer, der einen Pufferungsbereich zwischen pH 6,5 bis 7,5 ergibt, enthalten ist.

5. Farbstoffmischung gemäß wenigstens einem der vorhergehenden Ansprüche, dadurch gekennzeichnet, daß die Mischung 0,5 bis 10 Gew.-Teile eines organischen, anionischen Dispergiermittels und 0,5 Gew.-Teile eines Entstaubungsmittels, jeweils bezogen auf die gesamte Mischung, enthält.

6. Verfahren zum Färben von Cellulosefasern, Cellulosemischfasern mit einer Mischung aus Reaktivfarbstoffen, dadurch gekennzeichnet, daß eine Mischung gemäß wenigstens einem der der vorhergehenden Ansprüche verwendet wird.

7. Verfahren nach Anspruch 6, dadurch gekennzeichnet, daß nach dem Klotz-Kaltverweil-Verfahren, dem Klotz-Dämpf-Verfahren oder dem Ausziehverfahren gefärbt wird.

8. Farbstoffmischung, gemäß Anspruch 1, dadurch gekennzeichnet, daß zusätzlich zur Phthalocyaninvinylsulfonylreaktivfarbstoffmischung eine Reaktivgelbfarbstoffmischung enthalten ist, die wenigstens einen der folgenden Farbstoffe 4 bis 6 enthält:

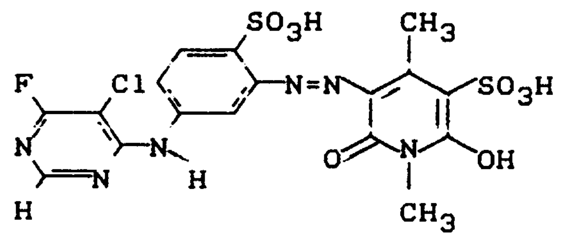

4)

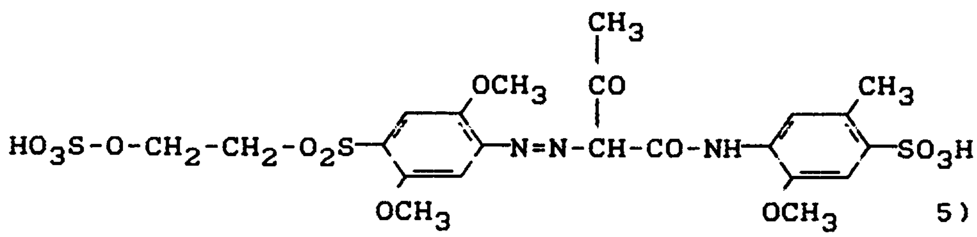

5)

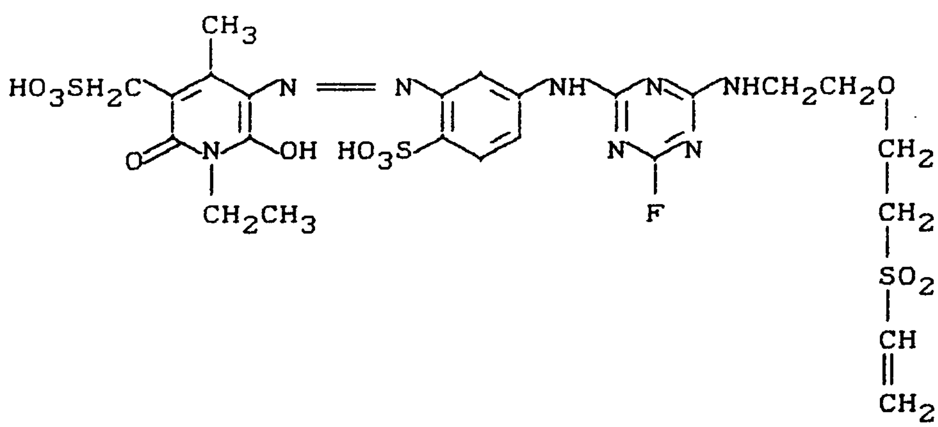

6)

9. Farbstoffmischung gemäß Anspruch 1, dadurch gekennzeichnet, daß zusätzlich zur Phthalocyaninvinylsulfonylreaktivfarbstoffmischung eine Reaktivgelbfarbstoffmischung enthalten ist, die wenigstens einen der Farbstoffe 7 bis 9 enthält:

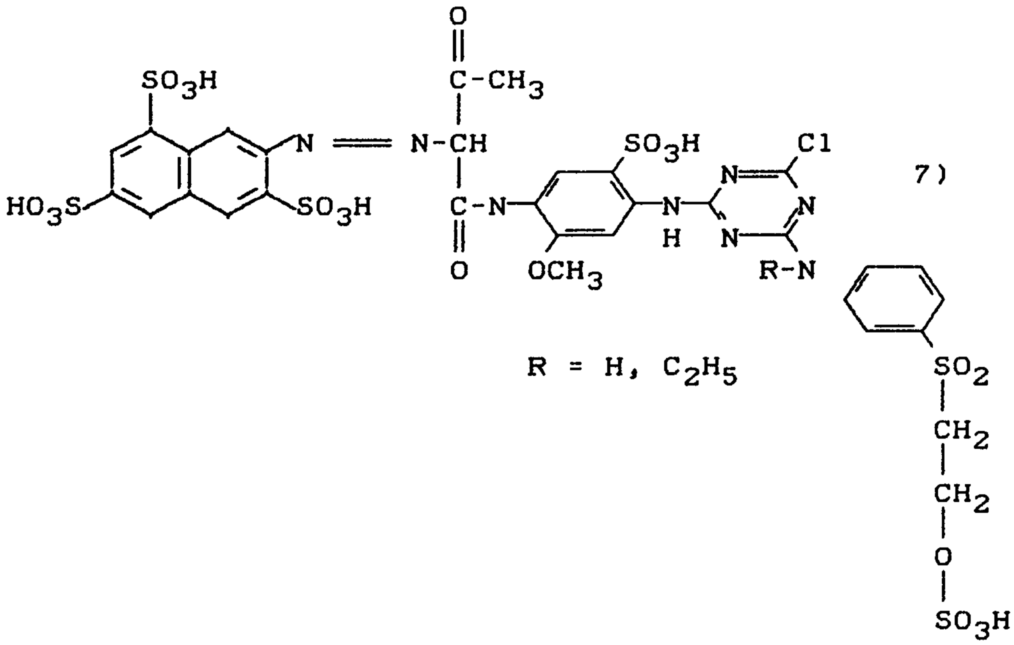

7)

R = H, $C_2H_5$

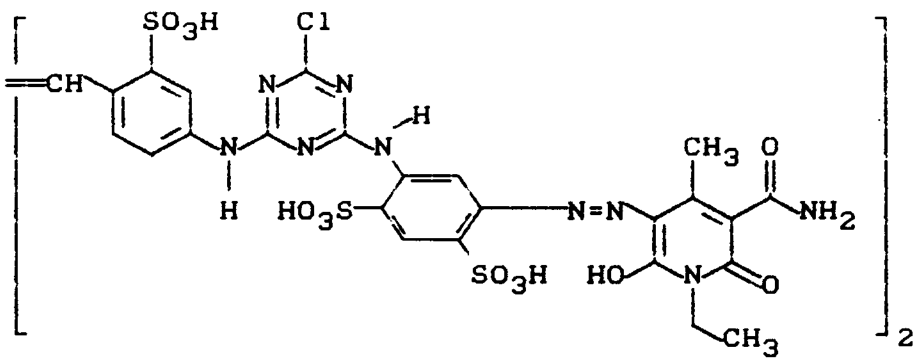

8)

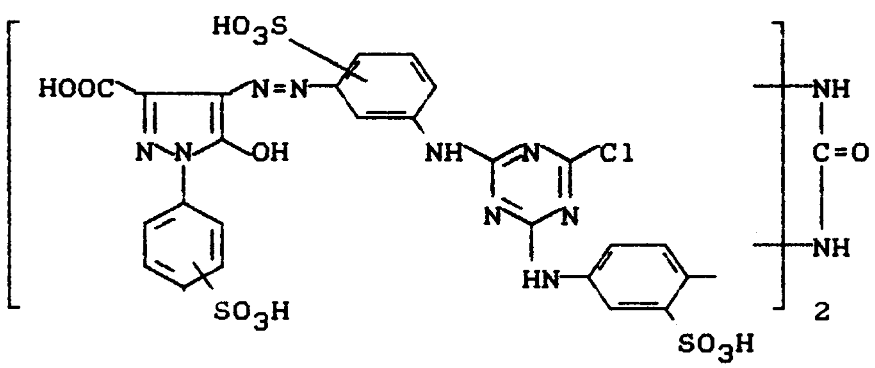

9)

**10.** Textilien, die Fasern enthalten, die mit einer Reaktivfarbstoffmischung gemäß wenigstens einem der vorhergehenden Ansprüche gefärbt worden sind.